(19) **Europäisches Patentamt European Patent Office Office européen des brevets**

(11) **EP 4 388 496 B1**

(12) **EUROPEAN PATENT SPECIFICATION**

(45) Date of publication and mention
of the grant of the patent:
**14.05.2025 Bulletin 2025/20**

(21) Application number: **22802654.8**

(22) Date of filing: **21.10.2022**

(51) International Patent Classification (IPC):
**G06T 7/00** *(2017.01)*      **G06T 7/11** *(2017.01)*
**G06T 7/187** *(2017.01)*

(52) Cooperative Patent Classification (CPC):
**G06T 7/11; G06T 7/0004; G06T 7/187;**
G06T 2207/10024; G06T 2207/20081;
G06T 2207/20084; G06T 2207/20101;
G06T 2207/30164

(86) International application number:
**PCT/EP2022/079332**

(87) International publication number:
**WO 2023/072744 (04.05.2023 Gazette 2023/18)**

(54) **METHODS AND SYSTEMS FOR GENERATING SEGMENTATION MASKS**

SUPERPIXEL-BASIERTE ERZEUGUNG VON SEGMENTIERUNGSMASKEN FÜR DAS
TRAINIEREN EINES SEGMENTIERUNGSMODELLS

GÉNÉRATION DE MASQUES DE SEGMENTATION BASÉS SUR DES SUPERPIXELS POUR
L'ENTRAÎNEMENT D'UN MODÈLE DE SEGMENTATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.10.2021 EP 21205589**

(43) Date of publication of application:
**26.06.2024 Bulletin 2024/26**

(73) Proprietor: **Siemens Aktiengesellschaft
80333 München (DE)**

(72) Inventors:
• **JANISCH, Lucas
  80803 München (DE)**
• **LUTZ, Benjamin Samuel
  91091 Großenseebach (DE)**

(74) Representative: **Siemens Patent Attorneys
Postfach 22 16 34
80506 München (DE)**

(56) References cited:
**US-A1- 2015 206 315**

• **SHUNTA SAITO ET AL: "Superpixel clustering
with deep features for unsupervised road
segmentation", ARXIV.ORG, CORNELL
UNIVERSITY LIBRARY, 201 OLIN LIBRARY
CORNELL UNIVERSITY ITHACA, NY 14853, 16
November 2017 (2017-11-16), XP080837730**

**Description**

The present invention is defined by the appended claims.

Roughly speaking, the subject matter disclosed herein relates to systems and methods for generating segmentation masks based on provided images and training semantic segmentation models based on generated segmentation masks.

Moreover, the subject matter disclosed herein relates to a system for monitoring a condition of a tool, particularly of a cutting insert of a machining tool, by using the above-mentioned trained semantic segmentation model.

Labeling objects in image scenes and using semantic segmentation to perform this task is known in the prior art (see, e.g., US patent application, published as US 2015/0206315 A1, or arXiv:1711.05998v1 [cs.CV], online on November 16, 2017). These techniques, being highly automatic, are prone to errors, where some superpixels are not labeled or labeled incorrectly.

The images can be (machining) tool wear images, images taken during an additive manufacturing process and comprising defects, coating images, etc. Although the focus in the present disclosure is made on machining application, it will be appreciated by the skilled person that the methods and systems disclosed herein are also applicable to images related to the additive manufacturing and/or coating processes.

In machining, the quality of the workpiece, such as dimensional accuracy and surface roughness, depends mainly on the condition of the cutting tool, i.e., its wear. The term tool wear refers to the change in shape from the original shape of the tool's cutting edges and neighboring areas.

There are many types of causes responsible for tool wear. Depending on the circumstances, the following main mechanisms have been identified:

- Abrasion is mainly caused by hard inclusions in the material, such as carbides and oxides.
- Cracks and fractures occur in the area of the cutting edge due to mechanical or thermal overload.
- Plastic deformation occurs when the cutting tool has too low resistance to deformation but sufficient toughness.
- Adhesion results from molecular adhesion between tool and workpiece.
- Diffusion occurs at high cutting speeds and mutual solubility of cutting material.

The cutting material is weakened by chemical reactions, dissolves, and is removed.

- Oxidation also occurs only at high cutting speeds. Contact with atmospheric oxygen oxidizes the cutting tool, weakening the microstructure.

Crater wear can occur on the rake face of the tool, where chip flow moves with frictional forces under high load and temperature. Crater wear unfavorably changes the angle at the cutting wedge. This is usually avoided or minimized by selecting cutting conditions and a cutting tool that does not have a diffusion affinity with the workpiece material.

A firmly adhering deposit of material particles can occur on the rake face of the cutting edge during the machining process. Such a formation is called a built-up edge (BUE). It causes a rough and unclean workpiece surface. Built-up edges occur mainly when the cutting speed is too low, the cooling lubrication is insufficient, or the rake face of the tool is rough.

Another form of tool wear is notch wear, which occurs at the depth-of-cut line when the tool rubs against the shoulder of the workpiece.

Chipping occurs when the cutting line breaks away from the tool cutting edge instead of abrading. A sudden load during machining or thermal gradients are two main reasons for this type of wear.

In practice, flank wear is generally used as the main criterion for cutting tool wear. This type of wear is caused by friction between the flank of the cutting tool and the machined workpiece surface and leads to the loss of the cutting edge. The flank wear primarily influences the geometrical accuracy and surface quality of the workpiece and is therefore usually decisive for the usage time of the tool.

For the actual tool life detection, the ISO Standard 3685 can be used. It specifies recommended procedures, the typical tool wear profile and its measurement. For a standardized identification of the wear, the cutting edge is divided into three areas:

- Area C is the curved part of the cutting edge at the tool corner, marking the wear area's outer end.
- Area B is the remaining straight portion of the cutting edge. which consists of a uniform wear zone.
- Area N extends over the area of mutual contact between the tool and the workpiece over about 1 to 2 mm along the main cutting edge. The wear in this area is of the notch type.

The cutting tool is assumed to have reached its tool life when the permissible tolerance for the workpiece can no longer be maintained due to the increasing wear width on the tool cutting edge. According to ISO 3685, the measurement of the width of flank wear is the most commonly used parameter to evaluate cutting tool lifespan. It is measured within zone B in the cutting edge plane perpendicular to the major cutting edge. As long as the wear profile is uniform, the average value of is measured. If the flank wear is instead uneven, the maximum wear width should be considered as a measurement.

To minimize machining costs, one must not only find the most suitable cutting tool and work material combination for a given machining operation but also reliably predict the tool life. The process of cutting tool wear typically consists of three characteristic parts: the initial period, the uniform wear period, and finally, the accelerated wear period. The machining process needs to be, on the one hand, stopped at the right time to prevent undesired consequences of the tool wear, while on the other hand, the tool should be replaced as late as possible to increase efficiency and decrease tooling costs. Therefore, monitoring the condition of the cutting tool plays an essential role in achieving consistent quality and controlling the overall cost of production.

In general, tool wear can be evaluated using either direct or indirect methods. The indirect methods are achieved by correlating suitable sensor data with the cutting tool wear. In this case, the wear information is not obtained directly but estimated from the signal of the measurement feature. Research on indirect TCM has utilized various signals such as cutting forces, acoustic emissions, vibrations, energy consumption, and temperatures to infer the current tool condition. In contrast, direct observation systems, such as laser scanners or camera-based solutions, measure exact geometric changes of the tool. For this purpose, a vision sensor can be built into the machine tool.

In most real-world scenarios, the tool stops at a fixed defined position, where an image of the tool is captured. Thereby, the image acquisition is neither influenced by chips and coolant nor by machine parameters such as vibration signals from the machining process. For sufficient illumination of the tool area, lights, for example LED lights, can be used. Also compressed air can be used before each shot to remove dirt and dust from the tools flank. A disadvantage of this approach is the production stop required to record the cutting tool. Nevertheless, image-based observation methods have the advantage of using image data similar to the standardized method defined in ISO 3685 described earlier. This, for example, allows the skilled person with knowledge of typical wear patterns to assess the condition of the tool manually.

In order to facilitate and to automate direct wear analysis in the machining industry computer vision (CV) techniques can be used.

The terms artificial intelligence (AI), Machine Learning (ML), Deep Learning (DL), and Computer Vision must first be distinguished from each other. Artificial intelligence refers to a field of computer science devoted to the development of systems that perform tasks that previously required human intelligence. Therefore, AI is an umbrella term for any computer program that attempts to mimic human intelligence and thus includes Machine Learning, which in turn includes Deep Learning. Machine learning covers all approaches that allow systems to learn from data and improve without being explicitly programmed. In short, Machine Learning is a technology for realizing AI. Deep Learning is a subcategory of Machine Learning. Here, neural networks are used to analyze data in a manner similar to a human neural system. Computer vision is an interdisciplinary field for the development of systems that include all tasks that can also be performed by the human visual system, which can be described as perceiving and understanding what is seen by extracting complex information.

A Machine Learning process is generally a computer program that is designed to learn from experience with respect to a set of tasks and a performance measure. Specifically, knowledge is developed from insights through training with data in the form of complex mathematical models. These models can then be applied to new data of the same kind as the training data in order to make predictions or decisions. According to the diverse data and tasks, a multitude of different models exists. In this context, a model can be described as a mathematical formula with adjustable parameters. By training with a learning procedure, these parameters are modified to subsequently achieve better results.

Different learning procedures can be divided into

- Supervised learning,
- Unsupervised learning, and
- Reinforcement learning.

Supervised learning uses a training dataset for which the correct output data is already known. The training data is created by manually assigning results to the input data. This process is called labeling and generates so-called ground truth data. During the supervised learning process, these generated data samples are iteratively fed to the algorithm. At each iteration, the model generates a prediction with its current parameters, which is compared with the label. If there is a discrepancy between the prediction and the ground truth label, an error rate is calculated. During the learning process, the model tries to adjust its parameters to minimize this error rate for more accurate future predictions.

In unsupervised learning, unlike supervised learning, the algorithm is not told what the desired output is for each input. Instead, the algorithm attempts to categorize the data based on its various properties. Models based on this type of algorithm can be used to discover unknown data patterns themselves.

Reinforcement learning is a Machine Learning technique in which an agent optimizes subsequent actions and reduces errors by processing feedback from interaction with the environment. At each time step, the agent receives some observations from the environment and must choose an action, which is then fed back to the environment. Finally, the agent receives a reward or punishment from the environment. The agent then selects a subsequent action together with the information from a new observation. The agent's behavior is controlled by a function that derives actions from observations of the environment. While the goal in unsupervised learning is to find similarities and differences between data points, the goal in self-reinforcing learning is to find an appropriate action model that maximizes the agent's total reward.

Simple Machine Learning algorithms, such as Support Vector Machines or Random Forests, work on a variety of important problems. However, they fail to solve the central challenges of AI, such as speech or object recognition. Artificial neural networks (ANN) provide a remedy. Artificial Neural Networks have many artificial neurons distributed over layers. The number of layers used corresponds to the depth of the model and can reach several hundred layers. Deep Learning is the term used when talking about such complex, multi-layered networks.

There are three types of layers that are present in every model. These include

- the input layer (receives the input data),
- the hidden layer (extracts the patterns within the data), and
- the output layer (produces the result of data processing).

In an artificial neural network, information is transferred from one layer to another via connection channels between neurons. When training the model, the weights, i.e., the numerical values at the connection channels, are adjusted. The output of one neuron can be used as input for all neurons in the subsequent layer. If this is the case, then the neurons of the model are fully meshed. The number of decisions an ANN makes in the input layer based on the input data is the number of neurons in the input layer. Each neuron in the second layer makes another decision by weighing the results of the first decision layer. In this way, a neuron in the second layer can make a decision at a more complex and abstract level than the one in the first layer. The output layer in an artificial neural network is the final layer that produces the algorithm's results. The design of the input and output layer is often trivial. For example, if an ANN should recognize in a handwritten image, whether it contains the number "5", the network can be designed to encode the intensities of the image pixels into the input neurons. For example, if the input image is a 64x64 pixel grayscale image, then there will be 4096 input neurons, which have values for intensities between zero and one. The output layer, on the other hand, contains only a single neuron whose output value leads to the detection of a "5" in the image if it is above a threshold.

Backpropagation is the repetitive process of adjusting the weights of an ANN so that it is trained to get better at solving a problem. This is done by passing the input values through the network, comparing the output with the expected result, and calculating an error rate via a cost function. This error rate is cascaded backwards through the network to modify the weights so that the error rate is reduced, and the next time the same or similar inputs are passed through the network, the prediction is closer to the ground truth. The weights are usually not updated after each iteration but after passing through a batch of data. The results of the training are saved and made reusable by storing the trained weights.

For the cost function mentioned above, various approaches exist for calculating and minimizing the error between the output of the network and the labeled data. An established method for the calculation is the quadratic cost function with a subsequent search for the minimum of the function by the gradient descent method. The training process is successful if the result C (cost function) = 0 is true, which means that the network's outputs correspond to the labels of the training data. The goal of the gradient descent procedure is to find this minimum of the cost function as a function of all weights and bias values.

The supervised learning procedure, i.e., weight adjustment, of Machine Learning models requires labeled training data to evaluate the outputs generated by the network. The data is usually divided into

- training,
- validation, and
- test data.

The training dataset is used to train the weights of the network. The more training data a learning algorithm receives, the better it can adapt its model and reduce the error rate. The performance of a model also depends on the quality of the training data. If the algorithm is shown too many wrong examples, it will learn wrong answers.

During training, the model also predicts an output for each input from the validation dataset. This prediction is executed based on what it learns from the training dataset. The calculated cost function results from the validation dataset do not affect the adjustment of the weights in the model. One of the main reasons for using a validation dataset is to ensure that the model is neither over-fitting nor under-fitting to the training data. An over-fitted ANN is able to evaluate the data from the training dataset but is not capable of making accurate predictions for new data with which it has not been trained. Under-fitting, on the other hand, refers to models that do not describe data or reality accurately enough. Based on the validation results, the hyper-parameters of the models, such as the learning rate or the training duration, can be selected.

The test dataset is used to perform an unbiased evaluation of the final ANN.

The percentage distribution of data between the different domains varies greatly with the nature of the task. An established division of the data consists of 60 % training data, 20 % validation data and 20 % test data. For ANNs with few hyperparameters to adjust, the validation dataset can often be kept very small to use the data for a larger training dataset.

Convolutional neural networks (CNNs) are a special type of multilayer neural network for processing data that has a known grid-like topology. Input examples can include image data that can be represented as a 2D grid of pixels. Convolutional meshes are therefore frequently used in computer vision. The main distinction between CNNs and ANNs is that CNNs are composed of convolutional layers instead of conventional artificial neurons.

Conventional neural networks comprise fully meshed or partially meshed neurons in several layers. These structures reach their limits when processing images, as there must be a large number of inputs corresponding to the number of pixels. The number of layers and the connections between them are usually extremely large and can therefore only be handled by computers with very high performance. Convoluted neural networks provide a solution to this.

The majority of developed CNNs comprise a combination of three different layers. These are

- the convolutional layer,
- the pooling layer, and
- the fully connected layer.

To increase the non-linearity of the output, which is unlikely to have a linear relationship with the input, the convolutional layer can comprise an activation function (as its component). One example of an activation function is the Rectified Linear Unit (ReLU). ReLU is a piecewise linear function that will output the input directly if it is positive, otherwise, it will output zero.

The pooling layer can condense and reduce the resolution of the recognized features. This aggregation can remove redundant information and reduce the amount of data, which in turn can reduce the required computing power and the sensitivity of subsequent convolutional layers to the location of the perceived features.

As with convolutional layers, pooling operators can consist of a fixed-size window that is pushed overall regions in the input and calculates an output step by step for the input data under consideration. Unlike the convolution layer, however, the pooling layer does not contain parameters. Instead, pooling operators are deterministic and usually compute either the maximum or the mean of the elements in the aggregation window. These operations are known as maximum pooling and average pooling.

The end of the architecture of a CNN is formed by one or more fully meshed (fully connected) layers. They join the repetitive sequence of convolutional and pooling layers and map the results to the classes or objects to be recognized.

Metric Learning is a popular concept in modern Machine Learning areas to learn a suitable similarity measure between two entities. The approach aims to automatically construct task-specific distance metrics from supervised data in a Machine Learning manner. Convolutional neural networks provide a new representation of input data and enable automatic feature extraction with the goal of achieving a higher level of abstraction in data transformation. In recent years, Deep Learning and Metric Learning have been merged to introduce the concept of Deep Metric Learning (DML). Often, a neural network learns to predict multiple classes. This poses a problem when new classes are to be removed or added from the data. In this case, the neural network must be updated and retrained with the entire dataset. Deep metric learning models, on the other hand, learn a similarity function so that they can determine whether the two images are the same or very similar. This allows us to classify new classes of data without having to retrain the network.

One of the further advantages of DML models is their robustness to class imbalances. With only a few instances per class, it is sufficient for metric learning approaches to recognize the similarity of new pictures to these reference images. Another possible advantage is that the trained models can also be used with different object classes. For instance, a metric learning model that can recognize similarities in images of giraffes will most likely also recognize similarities in images of other animals correctly.

The disadvantages of Deep Metric Learning models are that they need more training time than normal networks because they require pairs of images to learn. Also, a metric learning model does not output the probability of a class but the distance to each instance in a reference dataset.

The primary approach of classical Metric Learning is to learn a metric to reduce the distances between samples of the same class and increase the distances between the samples of a different class. In most conventional metric learning methods, samples are represented by hand-crafted features. The goal is to learn a feature mapping to project samples from the original feature space to a new space with more meaningful discrimination using a similarity relationship between samples.

With this approach, a good metric can be obtained from the input data, but the handgenerated features are task-independent and can lead to information loss, which limits the learning performance of the metric. Given the success of CNNs in classification tasks, researchers are now extracting embeddings directly from these networks. The Deep Metric Learning models developed in this way far outperform classical metric learning methods. Moreover, DML models are more transferable to new tasks because fine-tuning the parameters for manual feature extraction is no longer required.

For the training of a DML model, a set of data points X and their corresponding labels Y are used. The goal is to train a CNN, here also referred to as feature extractor $G_W$ where W are the learned weights. Together with a distance metric D which is usually fixed beforehand $D(G_W(x_1), G_W(x_2))$ produces small values if the labels $y_1, y_2 \in Y$ of the samples $x_1, x_2 \in X$ are equal, and larger values if they are not.

The most important factors when building a Deep Metric Learning model are the network structure, the loss function, and the sample selection. The Siamese Neural Network (SNN) can be used as a leading network structure. The SNN contains two identical subnetworks. "Identical" here means that they (subnetworks) have the same configuration with the same parameters and weights. The parameter update is mirrored over both subnetworks. As a metric learning approach, the Siamese network receives pair images, including positive or negative samples, to train a network model. The Distance $D_W$ for a pair of input samples $x_1$ and $x_2$ can be calculated as:

$$D_W(x_1, x_2) = \|G_W(x_1) - G_W(x_2)\|_2$$

where $G_W(x_1)$ and $G_W(x_2)$ are new representations generated by the neural networks. $D_W$ is used to calculate the distance between the two inputs in loss functions. $L_{Contrastive}$ that can be used to calculate a loss in Siamese network model is,

$$L_{Constrative} = ((1 - Y)(D_W)^2 + Y(max(0, m - D_W)^2)/2$$

where Y is the label value. If a pair of inputs is from the same class, the value of Y is one, otherwise its value is zero. A margin m is useful to prevent the network from "cheating" by mapping all X to the same point, making the distances between all samples equal to zero.

Another network structure is the Triplet network which is inspired by the Siamese network. It contains three objects, namely a positive, a negative, and an anchor sample. Triplet loss first focuses on the similarity between the pair samples of the same and different classes using shared weights. The classification is performed by comparing the similarity of pair samples. Compared to Siamese networks, Triplet networks are more distinctive by using both intra-class and cross-class relationships.

$$L_{Triplet} = max(0, \|G_W(X) - G_W(X^p)\|_2 - \|G_W(X) - G_W(X^n)\|_2 + \alpha$$

Although Deep Metric Learning is particularly concerned with the metric loss function, informative sample selection also plays an essential role in Deep Metric Learning models. Informative samples are one of the most important elements that increase the success of Deep Metric Learning. The sampling strategy can increase both the success of the network and the training speed of the network. The triplet network, for example, uses an anchor, a positive sample, and a negative sample to train a network.

Some simple triplets have no effect on updating a model because of their low discriminatory power. These triplets cause a waste of time and resources. To solve this problem, informative sample triples instead of random samples can train more precise models faster. Therefore, Negative Samples Mining is introduced, where on each training step, triplets X, $x_p$, $x_n$ are sampled that satisfying

$$D_W(X, x_r) < D_W(X, x_p) + \alpha,$$

i.e., the samples that the network fails to discriminate or is not able to discriminate with high confidence.

Computer Vision (CV) is a technical field that deals with enabling computers to see, identify, and process images in the same way as human visual perception. Machine Learning methods and specifically CNNs find their application in computer vision and are responsible for great successes in the field. The main CV tasks that are addressed in this disclosure are image classification and image segmentation.

Image classification is a task that attempts to capture an image in its entirety. The goal is to assign a label from a fixed set of categories to an input image. Typically, image classification refers to images in which only one object occurs and is analyzed. This is one of the core problems of computer vision, which has a variety of practical applications despite its simplicity. Some examples of image classification include:

- Classifying handwritten digits
- Labeling an X-ray image as cancer or not
- Assigning a name to a photograph of a face

Moreover, other seemingly independent machine vision tasks, such as image segmentation, can be reduced to an image classification job.

Semantic image segmentation, also referred to as pixel-level classification, is the process of grouping parts of the image that belong to the same object class. Therefore, labels are assigned from a label set to each pixel. The pixels that belong to the same class take the same color value, resulting in a masked image. This clustering aims to identify meaningful segments that can be used to describe the content of the image. In semantic segmentation, multiple objects of the same class a treated as one entity.

In contrast, so-called instance segmentation treats multiple objects of the same class as distinct individual instances.

One approach for semantic image segmentation models is an encoder-decoder structure, where the encoder part is a convolutional network as in classification networks. Instead of aggregating the data into a single class after the convolution part like in a classification task, the decoder section is attached, which is a reverse convolutional neural network. It upsamples the feature representation size layer by layer to a full resolution segmentation map. Across the encoder-decoder layers, connections can be used to transfer features that help to reconstruct the mask images with higher accuracy.

Superpixel segmentation, sometimes also referred to as over-segmentation, is a method of clustering pixels in an image into meaningful regions. The superpixels can then be used in place of the original pixels to reduce complexity and improve performance in many computer image processing applications such as object localization, multi-class segmentation and related computer vision tasks. Superpixels can

- define a unique subset of the image,
- represent connected sets of pixels,
- preserve boundaries of objects in the image,
- have a compact shape, are regularly distributed and have smooth edges when there are no object boundaries,
- be created efficiently and
- be controllable in their amount.

Therefore, a segmentation of an image can be done with two or more different values for the amount of areas to be generated.

Several superpixel generation algorithms exist. The Simple Linear Iterative Clustering (SLIC) algorithm is a simple and computationally efficient algorithm for superpixel segmentation. SLIC is also able to create superpixels with good boundary matches.

SLIC generates superpixels by clustering pixels based on their color similarity and proximity in the image plane. This can be done in a five-dimensional space $[l_i, a_i, b_i, x_i, y_i]$, where $[l_i, a_i, b_i]$ is the pixel color vector in CIELAB color space and $[x_i, y_i]$ is the pixel position. The CIELAB color space can be divided into three channels, where L* represents the brightness, a* the red-green axis and b* the yellow-blue axis.

When the algorithm is used by default, the only parameter of the algorithm is k defining the desired number of superpixels. The clustering process begins with the initialization of k initial cluster centers $C_i = [l_i, a_i, b_i, x_i, y_i]^T$, which are sampled on a regular grid with a spacing of S pixels. To produce equal-sized superpixels, the spacing is defined as S $= \sqrt{\frac{N}{k}}$, where N is the number of pixels in the image. The centers can be moved to seed positions corresponding to the lowest gradient position, for example in a $3 \times 3$ pixel neighborhood to avoid placing a superpixel on an edge and to reduce the probability of seeding a superpixel with a noisy pixel. Since the approximate area of a superpixel is $S \times S$, it can be assumed that the pixels belonging to this cluster center lie within an area of $2S \times 2S$ around the superpixel center in the xy-plane. Each image pixel is assigned to the nearest cluster center in CIELAB space whose search area overlaps with that pixel. After all, pixels are assigned to the nearest cluster center, a new center is calculated as the mean $[l, a, b, x, y]^T$ vector of all pixels belonging to the cluster. The process of assigning pixels and recalculating the cluster center is repeated until convergence. If the process is canceled before full convergence is achieved, the remaining disjoint pixels are assigned to nearby superpixels to force connectivity. A pseudo-code version of the described algorithm can be seen in following Algorithm 1.

```
1: Initialize cluster centers C_k = [l_k, a_k, b_k, x_k, y_k]^T by
   sampling pixels at regular grid steps S.
2: Move cluster centers to the lowest gradient position in a
   3×3 neighborhood.
3: Set label l(i) = -i for each pixel i.
4: Set distance d(i) = ∞ for each pixel i.
5: repeat
6:    for each cluster center C_k do
7:         for each pixel i in a 2S×2S region around C_k do
8:              Compute the distance D between C_k and i.
9:              if D < d(i) then
10:                  set d(i) = D
11:                  set l(i) = k
12:   Compute new cluster centers.
13:   Compute residual error E.
14: until E ≤ threshold
```

Superpixel Sampling Network (SSN) is another algorithm for generating superpixels. SSN combines a neural network, which for example can be based on a CNN, for extracting image features with a differentiable version of the superpixel algorithm SLIC. The differentiable SLIC is designed to compute pixel-superpixel association and to compute superpixel centers, wherein these two steps are performed as a closed loop. The method thus represents the first end-to-end trainable deep superpixel prediction technique.

Just as for the SLIC algorithm, the input is a representation of the image in the five-dimensional space $[l_i, a_i, b_i, x_i, y_i]$. In the primary part of the algorithm, the CNN extracts deep features F of size $(n \times k)$ from the input image, and the superpixel centers are initialized. Where n is the number of pixels in the image and k is the number of channels the network determines. The m superpixel centers $S^0 \in R^{m \times 5}$ are then sampled evenly across the pixel grid. Just like described in the SLIC algorithm, the centers can be then moved to the position within a $3 \times 3$ neighborhood with the lowest gradient. In the next step, the differentiable SLIC loop is repeated v times and the soft pixel-superpixel mappings $Q^t_{pi} \in R^{n \times k}$ as well as the superpixel centers $S^t$ are updated. The pixel-superpixel mappings in the original SLIC algorithm are hard associated, meaning that each pixel belongs to a particular superpixel in the SLIC loop. However, in the differentiable SLIC algorithm, these are turned into soft associations so that the algorithm can be trained from end to end. The soft associations can be specified by

$$Q^t_{pi} = e^{-\|F_p - S^{t-1}_i\|^2},$$

where the current SLIC iteration p refers to the pixel and i to the superpixel. The distance computations can be restricted to only few surrounding superpixels (for example nine surrounding superpixels). This is done due to the memory and computational power it takes to compute the distance for the complete set of superpixels. If memory and computational power is not an issue more surrounding superpixels can be considered.

The new superpixel centers are then derived using

$$S^t_i = \frac{1}{Z^t_i} \sum_{p=1}^{n} Q^T_{pi} F_p,$$

where $Z^t_i = \sum_p Q^t_{pi}$ the normalization constant.

A detailed procedure of the superpixel segmentation by the SSN can be seen in the Pseudo Code - Algorithm 2.

```
Input: Image $I_{n \times 5}$
Output: Pixel-Superpixel association $Q_{n \times m}$
1: Pixel features using a CNN, $F_{n \times k} = \mathcal{F}(I)$
2: Initial superpixel centers with average features in regu-
lar grid cells, $S^0_{m \times k} = \mathcal{J}(F)$
3: for each iteration t in 1 to v do
4:    Compute association between each pixel p and the sur-
rounding superpixel i, $Q^t_{pi} = e^{-\|F_p - S^{t-1}_i\|^2}$,
5:    Compute new superpixel centers, $S^t_i = \frac{1}{Z^t_i} \sum_{p=1}^{n} Q^T_{pi} F_p$ ; $Z^t_i = \sum_p Q^t_{pi}$.
```

.

Machine Learning models can be evaluated and compared. For example, Intersection over Union (IoU) can be used to evaluate object segmentation and object detection algorithms. In both tasks, IoU is applied to compare the detected area with the ground truth area of an object in the labeled image, i.e., an image from the ground truth data.

When evaluating Machine Learning models for object detection and classification the predictions are usually assigned to one of the four following categories:

- False Positive (FP): An object is detected although none is present.
- False Negative (FN): An existing object is not detected correctly.
- True Positive (TP): An existing object is detected correctly.
- True Negative (TN): An object that is not present is also not detected.

A precision value is used to measure how accurate the model's predictions are, that is, the percentage of all predictions that are correct and can be calculated as TP/(TP+FP). A recall value is the number of correct detections made over the total number of ground truth objects and can be calculated as TP/(TP+FN).

From this a precision-recall curve can be created, where precision is mapped on the ordinate and recall on the abscissa. To plot this curve, all detections of a single class are used and listed in descending order with respect to the detection probability given by the model. Since the first element has the highest probability, there is a high probability that it is a TP. For this case, the precision computes to one, while the recall is zero. Recall scores increase as when moving down in the prediction ranking. The accuracy value, on the other hand, shows a zigzag pattern as it decreases with false positives and increases again with true positives. A good algorithm should have high precision over all values of recalls.

To be able to compare different CNNs with the described metrics, a measure called Average Precision (AP) can be used. AP calculates the area under the precision-recall-curve.

When comparing classification systems, it may be appropriate to use mean Average Precision (mAP). This is calculated by computing the AP for each class and then averaging them over the number of all classes N.

Supervised learning techniques build predictive models by learning from a large number of training examples that are accompanied by labels indicating the ground-truth model output. Although current techniques have achieved great success, it is worth noting that for many tasks, the high cost of the labeling process makes it difficult to obtain large amounts of data. A good example is the MS-COCO dataset, including images of objects found in everyday life in their natural environments. Here 2.5 million category instances had to be once annotated with image-level class labels as well as with instance segmentation labels. When looking at image-level class labels, it took on average 20 seconds per object. For the instance segmentation, outlines had to be drawn, which took on average 80 seconds per object. An example for dense pixel-level annotations is the Cityscapes Dataset for Semantic Urban Scene Understanding. In that work, the annotation of an image took around 1.5 hours on average. Therefore, it is desirable that segmentation models operate with a lower supervision effort.

One possible approach to address the problem within the context of the supervised ML is to generate and annotate a dataset offline. To differentiate this type of labeling process from other techniques, it is referred to as pre-labeling. This form of labeling is expensive, time-consuming, and should be performed by experts. In the absence of a sufficiently large number of specialists, crawling images on the Internet is a relatively inexpensive and promising alternative. An exemplary application for this is the so-called DALL-E model, where images and their textual descriptions are collected from the Internet. However, this can lead to other problems, such as inconsistent and incorrect captions by multiple annotators. In addition, this method is not suitable for collecting segmentation masks.

Another approach is called Weakly Supervised Labeling. Weakly supervised methods reconstruct predictions starting from a weaker supervision input. There is a correlation between the supervision source and the model's output target. In some cases of the supervised learning, the supervision source can be equal to the desired model output. For example, this can be training with pixel labels to also predict pixel label masks. A training process can also abstract from pixel labels to bounding boxes or from bounding boxes to image labels. This is called strong supervision.

The idea of weakly supervised learning is that the training starts with a low level of supervision, e.g., image labels and moves to a higher level such as bounding boxes. For semantic segmentation, various sources of weak supervision are explored, including image labels, point clicks, bounding boxes, scribbles, and various combinations of these. Weakly supervised annotation can also include incomplete supervision, where only a subset of the training data is labeled. Another related discipline is working with imprecise supervision, where the training data is only roughly labeled.

Furthermore, interactive labeling can be used. Interactive labeling methods reduce human effort by building on weakly supervised methods to generate annotations and then having a human correct them. In the interactive image segmentation procedure, a target object is first roughly labeled using the same methods as in weak supervision. A Machine Learning model then extracts the object as a binary mask. The interactive aspect allows for correction of this prediction using either the original weak annotation method or related approaches. An example would be a weak annotation using a bounding box and correcting the predicted mask using clicks.

Another alternative to pre-labeling is the use of active learning, which allows for the continuous refinement of a previously learned model as new labeled data becomes available. Active learning assumes that there is a human expert who can be consulted to obtain ground-truth labels for selected unlabeled instances. Since user interactions are time-consuming and thus expensive, active learning aims to minimize the number of user interactions required by querying only the information that best improves the accuracy of the given model. To find the most potentially useful unlabeled instances for learning, there are several selection strategies that strongly depend on the application and are still researched in terms of their optimization.

Moreover, semi-supervised learning can be applied. It attempts to automatically exploit unlabeled data in addition to labeled data to improve a model's learning performance, while no human intervention is assumed. In supervised learning, one is presented with a set of data points consisting of some input and a corresponding output value. The goal, then, is to create a model that can estimate the output value for previously unseen inputs. In unsupervised learning, on the other hand, no specific output value is provided. Instead, one tries to infer some underlying structure from the inputs. The combination of these tasks is called semi-supervised learning. The basic idea is that higher accuracy can be achieved by combining the available amount of labeled data with large amounts of unlabeled data instead of using only one or the other.

Several applications of computer vision techniques to tool wear analysis are known in the art, see e.g. Lutz et al. "Evaluation of Deep Learning for Semantic Image Segmentation in Tool Condition Monitoring", in 2019 18th IEEE International Conference On Machine Learning And Applications (ICMLA), P. 2008-2013, IEEE, Boca Raton, FL, USA; Bergs et al. "Digital image processing with deep learning for automated cutting tool wear detection", in Procedia Manufacturing, 2020, Vol. 48, P. 947-958; Treiss et al. "An Uncertainty-based Human-in-the-loop System for Industrial Tool Wear Analysis", in arXiv:2007.07129 [cs], 2020.

All these methods used only a limited number of annotated images (100 in Lutz et al., 50 in Bergs et al., 213 in Treiss et al.) Such limited datasets are common in the industry, as the resources and knowledge required to obtain and label data are often limited. Under these circumstances, CNNs can occasionally produce suboptimal results because they typically require a significant amount of data to be trained. Increasing the number of annotated images requires a considerable effort. For example, using these state-of-the-art approaches labeling a single image (HD resolution) takes between 10 and 20 minutes. Thus, labeling a training dataset of 500 images would require 15 days of annotating effort.

Therefore, to obtain better predictive models a method is required to generate ground truth masks of the images, e.g., tool images with high accuracy.

The present disclosure focuses on further reducing human effort at an earlier stage of the machine learning development in condition monitoring applications.

In order to achieve this objective, the present invention provides a method for generating a segmentation mask of at least one image, for example a (machining) tool wear image, an image taken during an additive manufacturing process and comprising defects, a coating image, etc. The method comprises

A) Generating a plurality of superpixels (SP) for the at least one image, in particular for the whole image,
B) Automatically generating labels for the generated plurality of the superpixels (SP), wherein said automatically generating labels comprises

generating said labels for training a semantic segmentation model based on a plurality of segmentation masks by: generating a label for each superpixel by identifying the most similar reference superpixel from a reference data set of reference superpixels, wherein each reference superpixel is associated with a class for supervised training of said semantic segmentation model, wherein the labeled superpixels form the segmentation mask of the at least one image;

C) Computer-aided checking of the generated segmentation mask (MIm, CMIm1) for correctness, wherein said checking for correctness comprises labeling unlabeled superpixels and correcting labels of incorrectly labeled superpixels by assigning the incorrectly labeled superpixels to the correct class.

The image can be an application-specific image, i.e., image with a content that is specific for a particular application, e.g., an image of a worn out or damaged tool, etc.

The classes can be application-specific classes, i.e., classes that are specific for a particular application: for example tool wear degree classes and/or tool wear types, defect classes related to the additive manufacturing or to the coating inspection.

The use of superpixels may increase the boundary adherence of the generated segmentation masks.

The provided method falls into class of annotation or labeling methods.

In an embodiment, the generating a plurality of the superpixels can be done by using a Superpixel Sampling Network.

In an embodiment, the Superpixel Sampling Network can be based on a combination of a SLIC algorithm and a deep neural network.

In an embodiment, different labels are generated for different superpixels, particularly for each superpixel a label is generated.

In an embodiment, automatically generating labels involves a calculation of a similarity of the superpixels with reference superpixels from a reference dataset.

In an embodiment, the similarity of a superpixel of the plurality of the superpixels with each reference superpixel from the reference dataset is calculated and this calculation is repeated for each superpixel of the plurality of the superpixels.

In an embodiment, calculating the similarity comprises setting a similarity threshold.

In an embodiment, when the calculated similarity is below the set similarity threshold, a notification is issued. In an embodiment, in the notification the user can be asked to intervene and to classify the particular superpixel by hand. In this case, the method falls into the category of active learning methods.

In an embodiment, the calculation of the similarity involves applying a Distance Metric Learning method to the superpixels and to the reference superpixels.

Tool wear detection and defect detection, in general, are usually faced with the problems of an imbalanced dataset with limited defect samples. When some classes are scarcely present in standard classification models, they are most likely perceived as noise or outliers, resulting in more misclassifications of this minority than the prevalent class. To address this problem, Deep Metric Learning is applied in defect detection tasks. The Deep Metric Learning algorithm is less susceptible to a class imbalance because even if there is only one image representing a defect type in a reference dataset, every image to be labeled that is more similar to this defect image will be classified correctly.

In an embodiment, the Distance Metric Learning method comprises extracting features from images , for example from superpixel images and/or from the reference superpixel images, with a feature extraction module, e.g. nonlinear CNN-based feature extraction module, wherein the feature extraction module embeds the extracted image features into a feature space so that the more related the images are to each other the closer are the encoding vectors in the feature space, and defining the similarity of two images by a distance of their vectors in the feature space, e.g. by an appropriate distance metric.

In an embodiment, the training of the DML model may comprise using a loss function, e.g. Soft-triple-loss or Proxy-anchor-loss function.

In other words, Deep Metric Learning proposes to train a CNN-based, nonlinear feature extraction module (or an encoder), that embeds the extracted image features (also called embeddings) that are semantically similar, onto nearby locations while pushing dissimilar image features apart using an appropriate distance metric. The similarity metric is effective to distinguish small differences between images.

In an embodiment, the reference dataset comprises one or more subsets, wherein each subset comprises reference superpixels associated to one, e.g., to a single one, class of the classes and different subsets comprise reference superpixels associated with different classes. Such classes - in addition to a background class - for tool, e.g. cutting insert wear, can be flank wear class, build-up-edge class, groove class, etc.

In an embodiment, the reference dataset comprises one or more subsets, wherein each subset comprises reference superpixels associated to one tool wear degree class of the tool wear degree classes and different subsets comprise reference superpixels associated with different degrees and/or types of tool wear

In other words, a given input image is first passed through a deep network that generates features for each pixel.

These features are then passed to the SLIC's modification, which performs iterative clustering, resulting in the desired superpixels. In order to obtain superpixels that represent the border of even the smallest existing tool wear area, the number of superpixels to reach that requirement is determined once iteratively as a function of the image resolution.

In an embodiment, different colors are associated with different subsets.

In an embodiment, the superpixels are labeled with colors associated to subsets, they are most similar with.

In an embodiment, the method further comprises a check of the segmentation mask for logical constraints.

The method further comprises a computer-aided checking of the segmentation mask for correctness. This segmentation mask check can be performed by a user, e.g., by machining tool expert. The checking includes checking and correcting misdetected superpixels. For example this can be performed by a human expert, who checks if some of the superpixels were not labeled or were labeled incorrectly and corrects the labeling by associated the misdetected superpixels to the correct class.

In an embodiment, a human can be asked to check the resulting mask for faulty annotations and to correct them. Moreover, the human can be actively asked to check specific superpixels for which the similarity with a superpixel of the reference set was below a threshold, when such threshold was set while calculating the similarity.

In order to achieve the above-mentioned objective, the present invention also provides a system for generating a segmentation mask of at least one image, the system comprising an image providing device for providing the at least one image and a computing device associated with the image providing device, wherein the computing device is configured to receive the at least one image and to carry out the steps of the above-described method.

The image providing device may comprise an image acquiring device and/or a database or alike to facilitate providing of the at least one image.

It will be appreciated by a skilled person that the computing device comprises a memory that stores machine-executable components and a processor that is operatively coupled to the memory, and is configured to execute the machine-executable components.

In order to achieve the above-mentioned objective, the present invention also provides a system for monitoring a condition of a tool of a machining tool, wherein the system comprises an image acquisition device, which is associated with a machine tool and is designed to acquire images of the tool, and a computing system associated with the image acquisition device and comprising a semantic segmentation model trained on a plurality of segmentation masks produced according to the above described method to perform analysis of the images of the tool.

In order to achieve the above-mentioned objective, the present invention also provides a computer-readable medium comprising a computer program with instructions for carrying out the above described method.

The above and other objects and advantages of the invention will be apparent upon consideration of the following detailed description of certain aspects indicating only a few possible ways which can be practiced. The description is taken in conjunction with the accompanying drawings, in which like reference characters refer to like parts throughout, and in which:

FIG 1    shows a flow diagram of a method for generating a segmentation mask of at least one machining tool wear image,

FIG 2    illustrates a pipeline of an embodiment for producing the reference or training dataset,

FIG 3    shows a system for producing segmentation masks,

FIG 4    illustrates an image and a manually labeled image,

FIG 5    illustrates an annotation tool, and

FIG 6    shows a system for monitoring a condition of cutting inserts in a machining tool.

The same reference signs in different figures may well correspond to the same technical features.

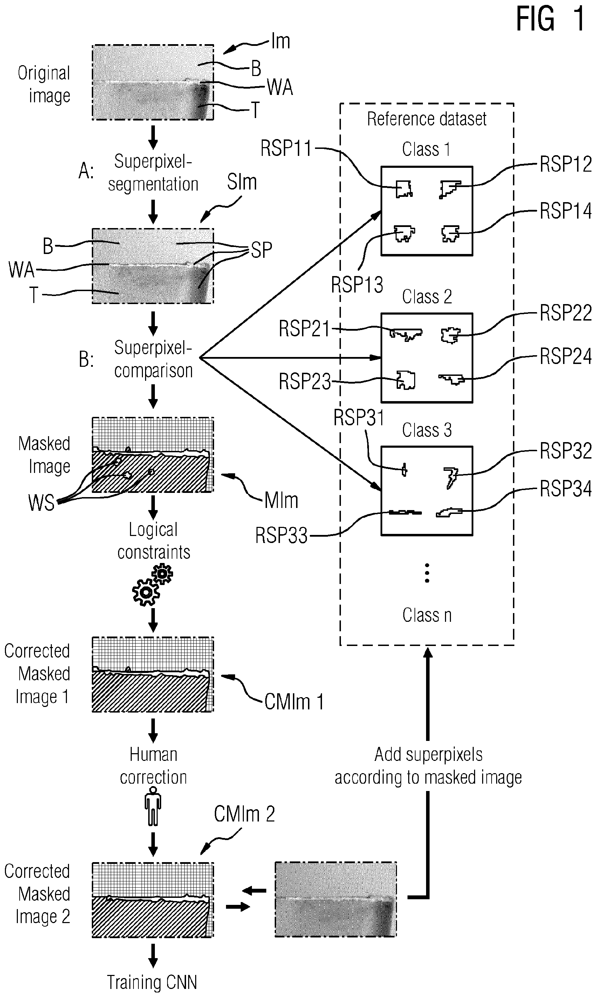

FIG 1 illustrates a processing pipeline that leads to a segmentation mask MIm, CMIm1 or CMIm2 for a machining tool wear image Im. This pipeline corresponds to an embodiment of the method according to the invention.

The processing pipeline starts with the generation of superpixels SP for the whole image Im (Step A). The image Im may comprise an image of a tool T (or at least a part of the tool), in particular of a tool T with a tool wear area WA, and a background B. The use of superpixels SP can increase the boundary adherence of the final segmentation masks MIm, CMIm1, CMIm2.

To generate superpixels SP algorithms like SLIC, Quick Shift, or Watershed can be used, as they have a low computational cost. These algorithms perform differently if it comes to the boundary adherence. For example, if a superpixel SP covers both the background B and the tool area T, the image can neither be correctly labeled nor serve as training data for the Deep Metric Learning model. While the SLIC algorithm outperforms the Watershed and Quick Shift algorithm in representing the tool T, background B, and wear area WA boundaries, some superpixels SP still may cover more than one class.

The generation of the superpixels SP can be also performed by using a Superpixel Sampling Network (SSN), which can be designed as a combination of a e.g. modified SLIC algorithm and a deep neural network. This method enables end-to-end training and the use of a deep network and can therefore be optimized by task-specific images and their semantic masks.

In an embodiment, the input image Im can be first passed through the deep network that generates features for each pixel. These features are then passed to the SLIC's modification, which performs iterative clustering, resulting in the desired superpixels SP - see superpixeled image Sim in FIG 1. To obtain superpixels SP that represent the border of even the smallest existing tool wear area WA, the number of superpixels SP to reach that requirement can be determined once iteratively as a function of the image resolution.

In an embodiment, the SSN can be pre-trained, e.g. on the BSDS500 dataset. When using this pre-trained model on tool images, superpixels that adhere to all semantic boundaries of different classes can be generated.

When using SSN (from scratch or pre-trained, e.g. PyTorch implementation), the segmentation results in a decrease of the superpixel boundary adherence.

In an embodiment, the number of superpixels N to get the best representation of the object boundaries was determined as N = $h \times w/10^4$ where h is the pixel height and $w$ the pixel width of the image.

The next step (Step B) deals with automatically generating a label for every generated superpixel SP and thus a mask MIm of the image Im. The resulting segmentation mask or masked image MIm shows that the superpixels were labeled into three classes: background (chequered area), tool body or undamaged tool area (dashed area) and the wear area (unmarked (white) area) in MIm.

In an embodiment, the automatic labeling method takes a superpixel SP and calculates its similarity with every superpixel RSP11, RSP12, RSP13, RSP14, RSP21, RSP22, RSP23, RSP24, RSP31, RSP32, RSP33, RSP34, ... from a reference dataset. This dataset can be organized into folders representing different classes Class 1, Class 2, Class 3, ... Class n that might be present in the image Im. At least a part of the classes Class 1 (e.g. background class), Class 2 (e.g. tool body or unweared tool class), Class 3 (e.g. wear class), ..., Class n (e.g. breakage) correspond to (tool) wear grade classes and/or wear types of the machining tool T - here Class 3 and Class n.

In an embodiment the similarity calculation is performed for every superpixel RSP11, RSP12, RSP13, RSP14, RSP21, RSP22, RSP23, RSP24, RSP31, RSP32, RSP33, RSP34 in the reference dataset. When the similarity calculation is done, the reference data set superpixel with the highest correlation is checked for the class it is labeled with. In an embodiment, different colors can be associated with different classes Class 1, Class 2, Class 3, ..., Class n. In an embodiment, the superpixel SP in the image Im can be then labeled with the color of the class associated with this most similar reference dataset superpixel RSP11, RSP12, RSP13, RSP14, RSP21, RSP22, RSP23, RSP24, RSP31, RSP32, RSP33, RSP34. Using colors in the segmentation mask facilitates visualization, e.g. by means of a web application 6 (see below) and helps to distinguish different detected tool defects.

In an embodiment, a similarity threshold can be set, when the similarity is checked. If the similarity value of a given superpixel to the most resembling reference superpixel does not reach this threshold, it will not be labeled or colored. This may simplify the subsequent correction of wrongly labeled superpixels SP.

In an embodiment the procedure (similarity calculation) is repeated for every superpixel SP in the image Im. By this method, the segmentation task is turned into an image-level classification task.

In an embodiment, to calculate the similarity of the superpixels SP with the reference data superpixels RSP11, RSP12, RSP13, RSP14, RSP21, RSP22, RSP23, RSP24, RSP31, RSP32, RSP33, RSP34, Distance Metric Learning can be applied. Particularly, a Deep Metric Learning method can be used in which a feature extraction module extracts features from the superpixel images, particularly from each superpixel's image. The feature extraction module can be based on a convolutional neural network, for example on a non-linear CNN. Such feature extraction modules are sometimes called encoder. The image features, also called embeddings, are then projected into an embedding space that maps related images onto nearby encoding vectors and unrelated ones far apart. The similarity of two (superpixel) images is then defined by the distance of their vectors in the embedding space. For example, superpixel images have shorter distances to superpixel images of the same class, while they have a larger distance to superpixel images of other classes.

In other words, applying the Deep Metric Learning may comprise training a CNN-based, nonlinear feature extraction module (or an encoder), that embeds the extracted image features (also called embeddings) that are semantically similar, onto nearby locations while pushing dissimilar image features apart using an appropriate distance metric. The similarity metric is effective to distinguish small differences between images.

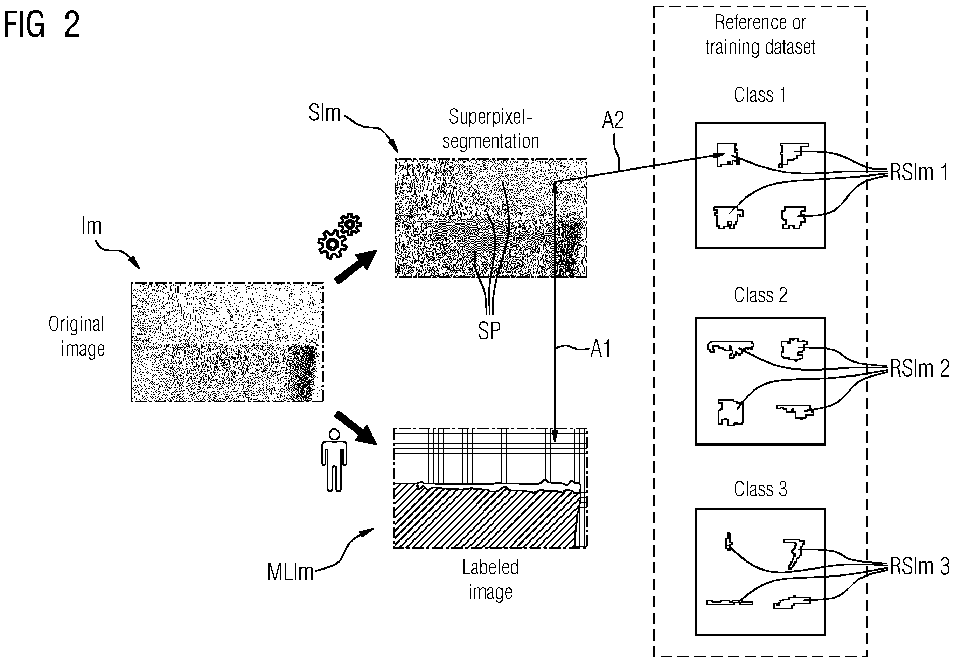

To train a Deep Metric Learning model, superpixels of the tool images can be generated to serve as training data (see e.g. FIG 2). For example, a series of images and masks of a plurality of different cutting tool flanks can be used. In an embodiment, no distinction is made between the two classes of flank wear and build-up edge (BUE), since they are very similar in appearance and are often unlikely to be distinguished by the metric learning model nor the human operator. In an embodiment, also other types of wear can be ignored in the training procedure, if they occur only rarely in the dataset and are difficult to distinguish from undamaged tool areas. This facilitates the convergence of the deep metric learning model.

In an embodiment, the training of the DML model may comprise using a loss function, e.g., Soft-triple-loss function or Proxy-anchor-loss function. The model converges at a much lower loss value when Soft-triple-loss is used. With Soft-triple-loss better training results can be achieved. To select the optimal weights the results on the validation dataset can be used.

Using the Deep Metric Learning algorithm increases insensitivity to class imbalance of the method, since the DML is not heavily influenced by the present class imbalance. When classes are scarcely present in standard classification models, they are most likely perceived as noise or outliers, resulting in more misclassifications of this minority than the prevalent class. DML helps with this. E.g. even if there is only one flank wear superpixel in the reference dataset, every flank wear superpixel in the image will be labeled correctly as long as it does not look more similar to any superpixel from another class. Another advantage of the deep metric learning approach is that it can compare not only the superpixels of the classes it is trained on but also of unseen ones. The same is true if the appearance of the classes varies, as the superpixels will be detected as long as the reference dataset covers these changes.

In an embodiment, a plurality of masked images MIm for the same original image Im can be produced while adding superpixels to the reference dataset after producing each of the masked images MIm. This can improve the quality of the reference dataset and therefore of the masked image MIm.

In an embodiment, when the segmentation mask MIm is generated, an algorithm can be used that checks the result MIm for logical constraints. These are set specifically for a given use case and are changed or disabled for other segmentation scenarios (other use cases). An example of a logical restriction is that there cannot be a superpixel of the wear class WS surrounded only by background superpixels since the wear can only occur on the tool or by superpixels from the bulk body of the tool T that has no wear (see the masked image MIm in FIG 1). A single superpixel detected as wear in the background area B or in the unweared area of the tool T can be automatically relabeled with the background class or unweared tool class. As a result, a corrected masked image CMIm1 can be generated.

In an embodiment, the method integrates a check and correct of misdetected and/or unlabeled superpixels by a user. This can be useful, since there may be incorrect detections that logical constraints cannot resolve. When the operator is satisfied and has completed the labeling process, the final mask CMIm2 can be either used for the analysis of the wear itself or as training data for a fully automatic image segmentation model. Such subsequent correction of the segmentation mask may reduce the amount of (computational) time spent labeling an image.

In an embodiment, all superpixels of the marked/annotated image(s) MIm, CMIm1 or CMIm2 can be added to the reference dataset according to the class they were annotated with. The reference dataset thereby becomes more extensive with each annotated image, which then leads to a better segmentation mask prediction in the following image to be labeled.

The algorithm described with regard to FIG 1 can be summarized as a pseudo-code.

```
Algorithm "Interactive image segmentation"
1: procedure Active Image Segmentation (Image, Reference Da-
taset, Threshold)
2:    for each superpixel in Reference Dataset do
3:        Generate Encoding, E ← MetricLearning
4:    Generate superpixels of Image, S ← superpixelSam-
plingNetwork
5:    for each superpixel in S do
6:        Generate Encoding, SupEn ← MetricLearning
7:        for each RefEn in E do
8:            Calculate Distance from RefEn and SupEn, d ←
SimilarityFunction
9:            if d ≤ threshold then
10:               threshold ← d
11:               Save class of RefEn, SPClasses ← RefEn-
Class
12: Colorize superpixel in Image according to SPClasses →
MaskedImage
13: Automatic logical correction of MaskedImage
14: Human correction of MaskedImage
15: for each superpixel in S do
16:        save superpixel with its class to the Reference Da-
taset
17: return MaskedImage
The generated reference or training data can be divided into
approximately 90 % train and 10 % test data.
```

In order to increase the amount and variety of data for training without having to create more pictures, it is useful to generate modified copies of the already existing images. In this procedure the images can be randomly flipped, rotated and/or subjected to an affine transformation. Furthermore, the image values for brightness contrast and saturation can be randomly modified before the training cycle.

In an embodiment, each class in the reference dataset comprises ten superpixels or less. This amount of reference data can be easily provided by manually labeling an image or two.

FIG 2 illustrates a pipeline of an embodiment for producing the reference or training dataset for the DML model that can be used in the processing pipeline of FIG 1.

It will be appreciated by the skilled person that the superpixels SP are generated (superpixeled image SIm is produced) with the same algorithm settings as in the later application of the labeling method, e.g. of the method of FIG 1. To determine the class of the superpixels, the original image Im can be labeled manually producing a manually labeled image MLIm. Subsequently, the annotation class of the mask MLIm at the position of a superpixel SP in the superpixeled image SIm is determined (this is illustrated by the arrow A1 in FIG 2). The superpixel SP can then be saved in the class corresponding folder Class 1 with reference superpixel images RSIm1, Class 2 with reference superpixel images RSIm2, Class 3 with reference superpixel images RSIm3, etc. This can be done for every superpixel SP in the image SIm (arrow A2 in FIG 2). For saving the superpixels as separate images, their area can be extracted, and black pixels can be added to the border. The superpixel SP with the image label can then be used to train the DML model. In the same manner, as the training data can be generated, the superpixels SP can be stored in the reference dataset for later use of the method. As for the start of the labeling procedure, only a small amount of reference is needed.

In an embodiment, it suffices to have only a few (one or two) of manually labeled images for creating the reference dataset. In an embodiment, the reference dataset comprises classes with ten or less images per class.

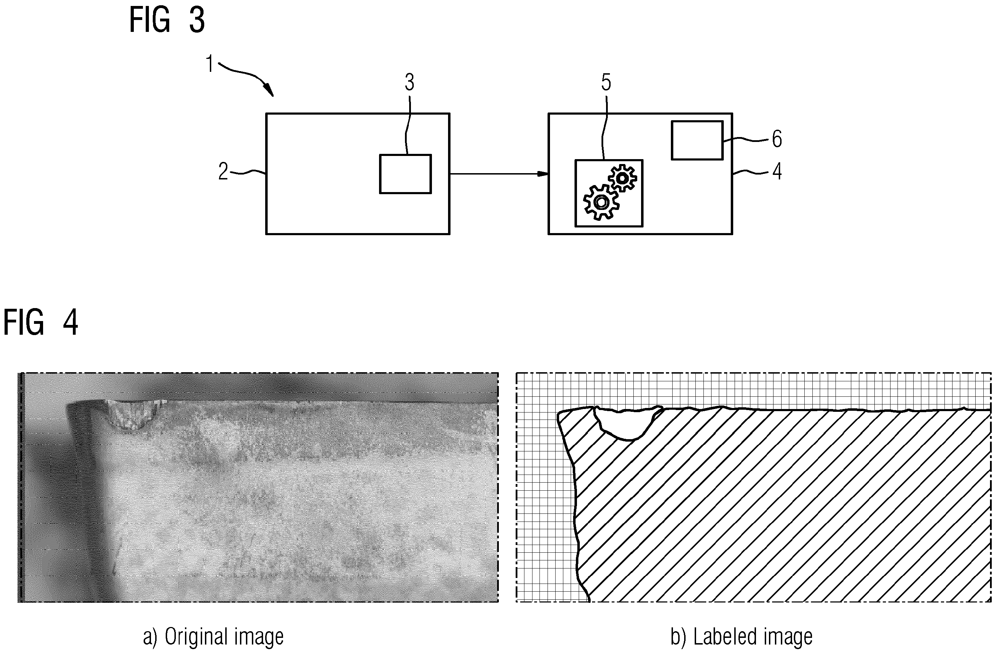

FIG 3 shows a system 1 for producing segmentation masks. The system may comprise an image acquisition device 2 for acquiring images of interest. For example, the image acquisition device 2 can acquire images of cutting tools used in a milling process, e.g. milling heads. The tools can have one or more, e.g. four cutting flanks, so that a plurality of tool flank images can be generated. To capture the images the image acquisition device 2 may comprise or be associated with a digital microscope 3. The microscope may have a definite resolution, to which the images can be cropped to, to remove unnecessary information from regions like the background.

In an embodiment, the pictures show the undamaged tool body and the background. Depending on the tool's condition, regions depicting different tool wear defects are present. The present defects can be for example grouped into flank wear, build-up-edge, and groove.

To generate labeled training data, some of the images (e.g. one or two images) of the milling heads tools can be annotated by an expert to provide an initial reference dataset. The initial dataset can be also provided otherwise, e.g. downloaded from a database. This can be performed by aid of a computing device 4, which is associated with the image acquisition device 2. The resulting masks of the manual labeling process can be images completely colored according to present classes. FIG 4 illustrates an image and a labeled image.

The computing device 4 may further comprise an algorithm 5, e. g. designed as a software that comprises instructions that, when carried out by the computing device 4, produce a masked image MIm or a corrected masked image CMIm1, for example according to the processing pipeline of FIG 1.

In an embodiment the computer device 4 may comprise a storage medium to store the masked images MIm or the corrected masked images CMIm1, CMIm2.

Furthermore, the computing device 4 may comprise a service, e. g. in form of a web application 6 that can be used by a user for example via a GUI and is designed to allow validation of the annotation method and to facilitate human correction of the masked image MIm or of the corrected masked image CMIm1.

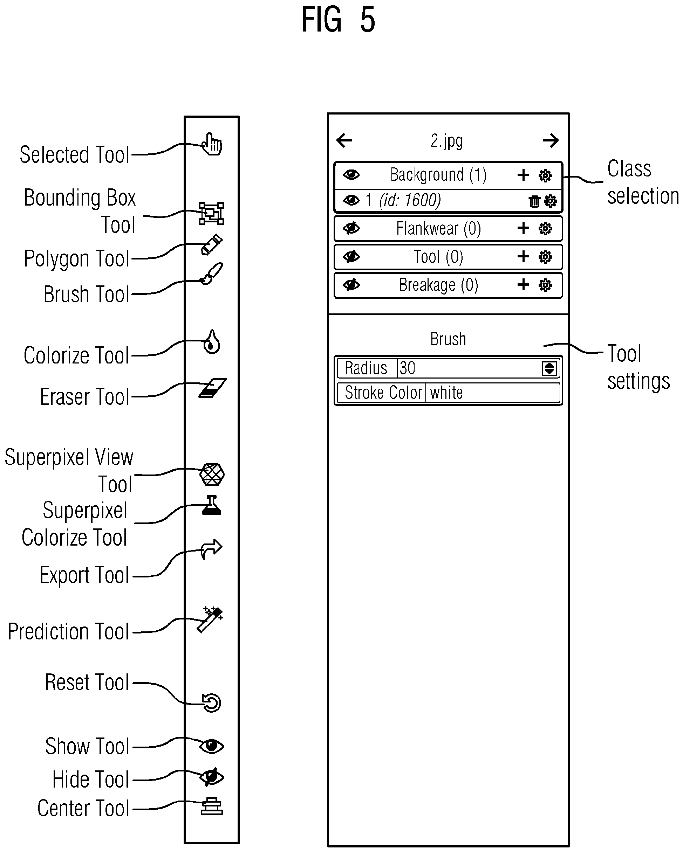

The annotation view of an embodiment of the web application 6 is illustrated in FIG 5. The annotation view can be designed to be used with a keyboard and a mouse and may include several shortcuts and gestures to improve the annotation efficiency.

The first step of generating an annotation is to select a class. This can be done in the right sidebar, as shown enlarged in FIG 5, by clicking the plus button after a class. The following annotations are assigned to this class and appear in the corresponding color. In the same sidebar, classes can be added or deleted and their color code can be changed.

A variety of functions can be available for generating image annotations, which can be selected and executed in the left navigation bar. Classic annotation techniques are available here.

The Select Tool is the default tool in the annotation view and allows to choose and to modify annotations directly on the canvas. The users can carry out any of the following operations to modify annotations:

- click and drag points to move them to their desired location,
- hold the shift key and click to remove points,
- click on any point on the contour of the shape to add more points.

The Bounding Box Tool allows the user to set two points that define the size and position of a rectangle. Subsequently, the box properties can be adjusted with the selection tool by clicking, dragging, and releasing.

The Polygon Tool allows users to click-drag release around objects to annotate them, while the system automatically assigns points along the boundary. After the polygon is generated, the select tool can be used to individually move each vertex independently to fine-tune the final shape.

Another function for manual labeling is provided by the Brush Tool. Here the user can first select a diameter in pixels to then click in the image to create a round polygon.

Furthermore, it is possible to create polygons with the selected diameter. As with the polygon tool, the resulting area can be adjusted with the selection tool.

When the user is satisfied with the polygon created by one of the above functions, it can complete the labeling for example by clicking on the Colorize Button. This will ink the polygon area in the appropriate class color.

If a user later disagrees with a previously colored area, the Eraser Button can be applied. To do this, the desired area to be deleted must be marked with a polygon using the previously described functions. Clicking the Eraser Button restores the original image information in the defined area.

The Superpixel Tool can be used to generate clustered areas for the whole image, e. g. by applying the Superpixel Sampling Network described above. The predicted superpixels can be then visualized by marking the boundaries, e. g. with thin yellow lines (correspond to gray lines in the superpixeled images SIm of FIG 1 and 2). The user can switch between the superpixel image and the original image at any time. Thereby the annotations made can be edited in both views. The superpixel view can be used on the one hand to adjust manual annotations, and on the other hand, the superpixel areas themselves can be colored automatically as a whole. For this purpose, first, the Superpixel Colorize Tool can be used. Subsequently, the desired class is selected to select any number of superpixels by clicking on them within their boundaries. When the selection is complete, the coloring can be triggered by pressing the Check Button in the left navigation bar.

At the bottom of the tool navigation bar, several helper functions can be implemented. The reset button restores the output state of the image and thereby deletes all annotations. With the usage of the mouse wheel, the image can be changed in size. Hereby the mouse position may be important as it zooms in and out from that location. In case the user gets lost in the zooming navigation, the Image Centering Tool can be used to show the image in its original size and position. Furthermore, there is a function to hide and show the annotations made. This allows the user to compare whether the mask matches the original image.

When the annotation of the image is finished, the superpixels can be added to the reference set by left mouse clicking the button. Thereby every superpixel can be added to a specific folder according to its annotated class. The additional reference data will then be used in the next image of the dataset when applying the prediction function.

For the case that faulty labeled superpixels were exported to the reference dataset, another app view can be implemented called Metric Learning. In this view the reference data for every existing dataset can be displayed. When accessing a specific reference dataset, the user is presented with a visualization of the folders organizing the superpixels images. In every folder, the superpixels images for a specific image and a certain class are located and displayed by a thumbnail. Here the user can either select the whole folder or single images to be deleted.

The generated segmentation masks MIm, CMIm1, and/or CMIm2 can be used to train a model, e. g. a semantic segmentation model. The masks MIm, CMIm1, and/or CMIm2 can also be used as additional reference data for the similarity detection step to label the next image. With every iteration, the automatically generated mask will therefore get better while reducing the human effort.

In an embodiment the computing device 4 can comprise a storage medium to store the masked images MIm or the corrected masked images CMIm1, CMIm2. Alternatively or additionally the computing device 4 may comprise an interface, for example a cloud interface, to store the images in a cloud, e.g. in a specific reference data database.

The generated segmentation masks MIm, CMIm1 or CMIm2 can be used to train a semantic segmentation model. The semantic segmentation model can be based on a convolutional neural network. In an embodiment, the computing device 4 can comprise an algorithm to train the semantic segmentation model based on the segmentation masks.

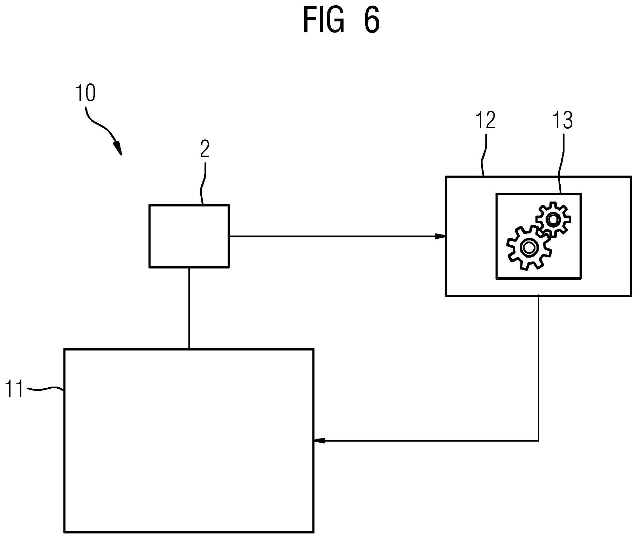

FIG 6 shows a system 10 for monitoring a condition of cutting inserts in a machining tool 11. The system can comprise the image acquisition device 2, which is associated with the machine tool 11 and is designed to acquire images of the cutting inserts used in the machine tool 11 for machining.

After an image of a cutting insert is acquired, it is sent to a computing system 12, for example to an edge computing device or to a service at a cloud platform or alike, that is designed to perform the analysis of the image. For this the computing system 12 comprises a trained semantic segmentation model 13 that can be based on a CNN and has been previously trained on the segmentation masks MIm, CMIm1, CMIm2 provided by methods described above.

In an embodiment, the computing system 12 can be provided with an interface allowing a user to choose the image to be analyzed and visualizing the results of the analysis. One possible result of the analysis can be a recommendation to an operator of the machine tool, e. g. a warning message indicating that the cutting tool is broken, and the operation of the machining tool shall be stopped to avoid damage of the machine or that the condition of the tool is good, and the operation may be continued.

In an embodiment, the analysis results comprise wear-related key performance indicators that can be stored and/or visualized, e. g. to the machine tool operator, with aid of the computing system 12.

Methods and systems disclosed herein reduce the human effort required to label tool images while maintaining or increasing the accuracy of the labels created. Therefore, the amount of time spent labeling an image is reduced. Using such images to train semantic segmentation model that is used for monitoring condition of tools or processes provides more accurate results.

An embodiment, in which the human can be asked to intervene when the similarity values of individual superpixels are below a threshold, falls into the category of active learning methods.

Regarding the influence of the size of the reference dataset, it is remarkable that already with a small amount of only ten superpixels per class, a high prediction quality is achieved by the DML model. Increasing the size of the reference dataset leads to further improvements.

Moreover, it has been observed that even if there is only one wear superpixel in the reference dataset, almost all wear superpixels in the image will be labeled correctly as long as they do not look more similar to any superpixel from another class. This shows that the methods disclosed herein show great insensitivity to class imbalance.

The reference signs used in the figures and in the claims are used for demonstrative purposes and shall not be considered as a limitation of corresponding claim features.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and vice versa. Correspondingly, while the description and the figures serve the purpose of illustration, the invention is defined by the appended claims.

**Claims**

1. Computer-implemented method for generating a segmentation mask (MIm, CMIm1, CMIm2) of at least one image (Im), the method comprising

   A) Generating a plurality of superpixels (SP) for the at least one image (Im),
   B) Automatically generating labels for the generated plurality of the superpixels (SP), wherein said automatically generating labels comprises
   generating said labels for training a semantic segmentation model based on a plurality of segmentation masks (MIm, CMIm1) by: generating a label for each superpixel (SP) by identifying the most similar reference superpixel (RSP11, ..., RSP34) from a reference data set of reference superpixels (RSP11, ..., RSP34), wherein each reference superpixel (RSP11, ..., RSP34) is associated with a class (Class 1, Class 2, Class 3, ... Class n) for supervised training of said semantic segmentation model, wherein the labeled superpixels form the segmentation mask (MIm) of the at least one image (Im);
   C) Computer-aided checking of the generated segmentation mask (MIm) for correctness, wherein said checking for correctness comprises labeling unlabeled superpixels and correcting labels of incorrectly labeled superpixels (WS) by assigning the incorrectly labeled superpixels (WS) to the correct class.

2. Method of Claim 1, wherein the generating a plurality of the superpixels is done by using a Superpixel Sampling Network.

3. Method of Claim 2, wherein the Superpixel Sampling Network is based on a combination of a Simple Linear Iterative Clustering algorithm and a deep neural network.

4. Method of any one of Claims 1 to 3, wherein automatically generating labels comprises calculating similarity of the superpixels (SP) with the reference superpixels (RSP11, ..., RSP34) from the reference data set.

5. Method of Claim 4, wherein the similarity of a superpixel of the plurality of the superpixels (SP) with each reference superpixel (RSP11, ..., RSP34) from the reference data set is calculated and this calculation is repeated for each superpixel of the plurality of the superpixels.

6. Method of Claim 4 or 5, wherein calculating the similarity comprises setting a similarity threshold.

7. Method of Claim 6, wherein, when the calculated similarity is below the set similarity threshold, a notification is issued.

8. Method of any one of Claims 4 to 7, wherein calculating the similarity comprises applying a Distance Metric Learning method to the superpixels (SP) and to the reference superpixels (RSP11, ..., RSP34).

9. Method of Claim 8, wherein the Distance Metric Learning method comprises

   - extracting features from superpixels images with a feature extraction module, wherein the feature extraction module embeds the extracted superpixel image features into a feature space so that the more related the superpixel images are to each other the closer are the encoding vectors in the feature space, and
   - defining the similarity of two superpixel images by a distance of their vectors in the feature space.

10. Method of any one of Claims 4 to 9, wherein the reference data set comprises one or more subsets (Class 1, Class 2, Class 3, ..., Class n), wherein each subset comprises reference superpixels (RSP11, ..., RSP34) associated to one class of the classes and different subsets comprise reference superpixels associated with different classes.

11. Method of any one of Claims 1 to 10, further comprising: checking the segmentation mask (MIm) for logical constraints.

12. Method for training a semantic segmentation model, the method comprising

Generating at least one segmentation mask (MIm, CMIm1, CMIm2) of at least one image (Im) according to all steps of the method according to any one of Claims 1 to 11;
Training a semantic segmentation model on the at least one segmentation mask (MIm, CMIm1);
Providing a trained semantic segmentation model.

13. Monitoring a condition of a tool of a machining tool (11) comprising training a semantic segmentation model according to the method of Claim 12 and using the trained semantic segmentation model to monitor the condition of the tool.

14. Computer-readable medium comprising a computer program with instructions for carrying out the method of any one of Claims 1 to 11.

15. System for monitoring a condition of a tool of a machining tool (11), wherein the system (10) comprises an imaging device (2), which is associated with a machine tool (11) and is designed to acquire images of the tool, and a computing system (12) associated with the imaging device (2) and is adapted to train a semantic segmentation model according to the method of Claim 12 and to use the trained semantic segmentation model (13) to perform analysis of the images of the tool to infer the condition of the tool.

**Patentansprüche**

1. Computerimplementiertes Verfahren zum Erzeugen einer Segmentierungsmaske (MIm, CMIm1, CMIm2) von mindestens einem Bild (Im), das Verfahren Folgendes umfassend

A) Erzeugen einer Vielzahl von Superpixeln (SP) für das mindestens eine Bild (Im),
B) Automatisches Erzeugen von Markern für die erzeugte Vielzahl der Superpixel (SP), wobei das automatische Erzeugen von Markern Folgendes umfasst
Erzeugen der Marker zum Trainieren eines semantischen Segmentierungsmodells auf Grundlage einer Vielzahl von Segmentierungsmasken (MIm, CMIm1) durch: Erzeugen eines Markers für jedes Superpixel (SP) durch Identifizieren des ähnlichsten Referenzsuperpixels (RSP11, ..., RSP34) aus einem Referenzdatensatz von Referenzsuperpixeln (RSP11, ..., RSP34), wobei jedes Referenzsuperpixel (RSP11, ..., RSP34) einer Klasse (Klasse 1, Klasse 2, Klasse 3, ... Klasse n) zum überwachten Trainieren des semantischen Segmentierungsmodells zugeordnet ist, wobei die markierten Superpixel die Segmentierungsmaske (MIm) des mindestens einen Bilds (Im) ausbilden;
C) Computergestütztes Prüfen der erzeugten Segmentierungsmaske (MIm) auf Richtigkeit, wobei das Prüfen auf Richtigkeit Markieren von nicht markierten Superpixeln und Korrigieren von Markern falsch markierter Superpixel (WS) durch Zuordnen der falsch markierten Superpixel (WS) zu der richtigen Klasse umfasst.

2. Verfahren nach Anspruch 1, wobei das Erzeugen einer Vielzahl der Superpixel unter Verwendung eines Superpixelabtastnetzwerks durchgeführt wird.

3. Verfahren nach Anspruch 2, wobei das Superpixelabtastnetzwerk auf einer Kombination aus einem einfachen linearen iterativen Clustering-Algorithmus und einem tiefen neuronalen Netzwerk basiert.

4. Verfahren nach einem der Ansprüche 1 bis 3, wobei automatisches Erzeugen von Markern Berechnen der Ähnlichkeit der Superpixel (SP) mit den Referenzsuperpixeln (RSP11, ..., RSP34) aus dem Referenzdatensatz umfasst.

5. Verfahren nach Anspruch 4, wobei die Ähnlichkeit eines Superpixels der Vielzahl der Superpixel (SP) mit jedem Referenzsuperpixel (RSP11, ..., RSP34) aus dem Referenzdatensatz berechnet wird und diese Berechnung für jedes Superpixel der Vielzahl der Superpixel wiederholt wird.

6. Verfahren nach Anspruch 4 oder 5, wobei Berechnen der Ähnlichkeit Einstellen eines Ähnlichkeitsschwellenwerts umfasst.

7. Verfahren nach Anspruch 6, wobei, wenn die berechnete Ähnlichkeit unter dem eingestellten Ähnlichkeitsschwellenwert ist, eine Benachrichtigung ausgegeben wird.

8. Verfahren nach einem der Ansprüche 4 bis 7, wobei Berechnen der Ähnlichkeit Anwenden eines Entfernungsmetriklernverfahrens auf die Superpixel (SP) und auf die Referenzsuperpixel (RSP11, ..., RSP34) umfasst.

9. Verfahren nach Anspruch 8, wobei das Entfernungsmetriklernverfahren Folgendes umfasst

- Extrahieren von Merkmalen aus Superpixelbildern mit einem Merkmaleextrahierungsmodul, wobei das Merkmaleextrahierungsmodul die extrahierten Superpixelbildmerkmale in einen Merkmaleraum einbettet, so dass je verwandter die Superpixelbilder einander sind, desto näher die Codiervektoren im Merkmaleraum sind, und
- Definieren der Ähnlichkeit von zwei Superpixelbildern durch eine Entfernung ihrer Vektoren im Merkmaleraum.

10. Verfahren nach einem der Ansprüche 4 bis 9, wobei der Referenzdatensatz mindestens eine Teilmenge (Klasse 1, Klasse 2, Klasse 3, ..., Klasse n) umfasst, wobei jede Teilmenge Referenzsuperpixel (RSP11, ..., RSP34) umfasst, die einer Klasse der Klassen zugeordnet sind, und verschiedene Teilmengen Referenzsuperpixel umfassen, die verschiedenen Klassen zugeordnet sind.

11. Verfahren nach einem der Ansprüche 1 bis 10, weiterhin Folgendes umfassend: Prüfen der Segmentierungsmaske (MIm) auf logische Zwangsbedingungen.

12. Verfahren zum Trainieren eines semantischen Segmentierungsmodells, das Verfahren Folgendes umfassend Erzeugen mindestens einer Segmentierungsmaske (MIm, CMIm1, CMIm2) mindestens eines Bilds (Im) nach allen Verfahrensschritten nach einem der Ansprüche 1 bis 11; Trainieren eines semantischen Segmentierungsmodells auf der mindestens einen Segmentierungsmaske (MIm, CMIm1); Bereitstellen eines trainierten semantischen Segmentierungsmodells.

13. Überwachen eines Zustands eines Werkzeugs einer Werkzeugmaschine (11), Trainieren eines semantischen Segmentierungsmodells nach dem Verfahren nach Anspruch 12 und Verwenden des trainierten semantischen Segmentierungsmodells umfassend, um den Zustand des Werkzeugs zu überwachen.

14. Computerlesbares Medium, ein Computerprogramm mit Befehlen zum Ausführen des Verfahrens nach einem der Ansprüche 1 bis 11 umfassend.

15. System zum Überwachen eines Zustands eines Werkzeugs einer Werkzeugmaschine (11), wobei das System (10) eine Bildgebungsvorrichtung (2), die einer Werkzeugmaschine (11) zugeordnet ist und eingerichtet ist, um Bilder des Werkzeugs zu erfassen, und ein Datenverarbeitungssystem (12) umfasst, das der Bildgebungsvorrichtung (2) zugeordnet ist und eingerichtet ist, um ein semantisches Segmentierungsmodell nach dem Verfahren nach Anspruch 12 zu trainieren und das trainierte semantische Segmentierungsmodell (13) zu verwenden, um eine Analyse der Bilder des Werkzeugs durchzuführen, um auf den Zustand des Werkzeugs zu schließen.

**Revendications**

1. Procédé mis en œuvre par ordinateur pour créer un masque (MIm, CMIm1, CMIm2) de segmentation d'au moins une image (Im), le procédé comprenant

A) créer une pluralité de superpixels (SP) pour la au moins une image (Im),
B) créer automatiquement des étiquettes pour la pluralité créée des superpixels (SP), dans lequel ladite création automatiquement d'étiquettes comprend créer lesdites étiquettes pour entraîner un modèle de segmentation sémantique sur la base d'une pluralité de masques (MIm, CMIm1) de segmentation en : créant une étiquette pour chaque superpixel (SP) en identifiant le superpixel (RSP11, ..., RSP34) de référence le plus similaire dans un ensemble de données de référence de superpixel (RSP11, ..., RSP34) de référence, dans lequel chaque superpixel (RSP11, ..., RSP34) de référence est associé à une classe (classe 1, classe 2, classe 3, ..., classe n) pour l'entraînement supervisé dudit modèle de segmentation sémantique,
dans lequel les superpixels étiquetés forment le masque (MIm) de segmentation de la au moins une image (Im) ;
C) contrôler assisté par ordinateur la correction du masque (MIm) de segmentation créé, dans lequel ledit contrôle de la correction comprend étiqueter des superpixels non étiquetés et corriger des étiquettes de superpixels (WS) étiquetés incorrectement en attribuant les superpixels (WS) étiquetés incorrectement à la classe correcte.

**2.** Procédé de la revendication 1, dans lequel la création d'une pluralité des superpixels est faite en utilisant un réseau d'échantillonnage de superpixels.

**3.** Procédé de la revendication 2, dans lequel le réseau d'échantillonnage de superpixels repose sur une combinaison d'un algorithme de groupement itératif linéaire simple et d'un réseau neuronal profond.

**4.** Procédé de l'une quelconque des revendications 1 à 3, dans lequel créer automatiquement des étiquettes comprend calculer une similarité des superpixels (SP) aux superpixels (RSP11, ..., RSP34) de référence dans l'ensemble de données de référence.

**5.** Procédé de la revendication 4, dans lequel la similarité d'un superpixel de la pluralité des superpixels (SP) à chaque superpixel (RSP11, ..., RSP34) de référence dans l'ensemble de données de référence est calculé et ce calcul est répété pour chaque superpixel de la pluralité des superpixels.

**6.** Procédé de la revendication 4 ou 5, dans lequel calculer la similarité comprend fixer un seuil de similarité.

**7.** Procédé de la revendication 6, dans lequel, lorsque la similarité calculée est en-dessous du seuil de similarité fixé, on émet une notification.

**8.** Procédé de l'une quelconque des revendications 4 à 7, dans lequel calculer la similarité comprend appliquer un procédé d'apprentissage métrique de distance aux superpixels (SP) et aux superpixels (RSP11, ..., RSP34) de référence.

**9.** Procédé de la revendication 8, dans lequel le procédé d'apprentissage métrique de distance comprend

- extraire des caractéristiques d'images de superpixels par un module d'extraction de caractéristiques, dans lequel le module d'extraction de caractéristiques incorpore les caractéristiques d'images de superpixels extraites dans un espace de caractéristiques de manière à ce que plus les images de superpixels sont en relation les unes avec les autres plus proches sont les vecteurs de codage dans l'espace de caractéristiques, et
- définir la similarité de deux images de superpixels par une distance de leurs vecteurs dans l'espace de caractéristiques.

**10.** Procédé de l'une quelconque des revendications 4 à 9, dans lequel l'ensemble de données de référence comprend un ou plusieurs sous-ensembles (classe 1, classe 2, classe 3, ..., classe n), dans lequel chaque sous-ensemble comprend des superpixels (RSP11, ..., RSP34) de référence associés à l'une des classes et des sous-ensembles différents comprennent des superpixels de référence associés à des classes différentes.

**11.** Procédé de l'une quelconque des revendications 1 à 10, comprenant en outre :
vérifier des contraintes logiques du masque (MIm) de segmentation.

**12.** Procédé d'entraînement d'un modèle de segmentation sémantique, le procédé comprenant

créer au moins un masque (MIm, CMIm1, CMIm2) de segmentation d'au moins une image (Im) suivant tous les stades du procédé suivant l'une quelconque des revendications 1 à 11 ;
entraîner un modèle de segmentation sémantique sur le au moins un masque (MIm, CMIm1) de segmentation ;
mettre à disposition un modèle de segmentation sémantique entraîné.

**13.** Surveiller un état d'un outil d'une machine-outil (11) comprenant entraîner un modèle de segmentation sémantique suivant le procédé de la revendication 12 et utiliser le modèle de segmentation sémantique entraîné pour surveiller l'état de l'outil.

**14.** Support déchiffrable par ordinateur comprenant un programme d'ordinateur ayant des instructions pour effectuer le procédé suivant l'une quelconque des revendications 1 à 11.

**15.** Système de surveillance d'un état d'un outil d'une machine-outil (11), dans lequel le système (10) comprend un dispositif (2) d'imagerie, qui est associé à une machine-outil (11) et qui est conçu pour acquérir des images de l'outil, et un système (12) informatique qui est associé au dispositif (2) d'imagerie et qui est agencé pour entraîner un modèle de segmentation sémantique suivant le procédé de la revendication 12 et pour utiliser le modèle (13) de segmentation sémantique entraîné pour effectuer une analyse des images de l'outil pour en déduire l'état de l'outil.

FIG 1

FIG 2

Im — Original image

SIm — Superpixel-segmentation

SP

MLIm — Labeled image

A1
A2

Reference or training dataset

Class 1 — RSIm 1

Class 2 — RSIm 2

Class 3 — RSIm 3

EP 4 388 496 B1

## FIG 3

## FIG 4

a) Original image

b) Labeled image

# FIG 5

Selected Tool

Bounding Box Tool

Polygon Tool

Brush Tool

Colorize Tool

Eraser Tool

Superpixel View Tool

Superpixel Colorize Tool

Export Tool

Prediction Tool

Reset Tool

Show Tool

Hide Tool

Center Tool

← 　　2.jpg　　 →

👁 　Background (1)　 + ⚙

👁 1 *(id: 1600)*　　 🗑 ⚙

👁 　Flankwear (0)　 + ⚙

👁 　Tool (0)　 + ⚙

👁 　Breakage (0)　 + ⚙

Brush

Radius │30　　　　　　 ⬍

Stroke Color│white

Class selection

Tool settings

# FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150206315 A1

**Non-patent literature cited in the description**

- *arXiv:1711.05998v1*, 16 November 2017
- Evaluation of Deep Learning for Semantic Image Segmentation in Tool Condition Monitoring. **LUTZ et al.** 2019 18th IEEE International Conference On Machine Learning And Applications (ICMLA). IEEE, 2008-2013
- **BERGS et al.** Digital image processing with deep learning for automated cutting tool wear detection. *Procedia Manufacturing*, 2020, vol. 48, 947-958
- **TREISS et al.** An Uncertainty-based Human-in-the-loop System for Industrial Tool Wear Analysis. *arXiv:2007.07129*, 2020